# EUROPÄISCHE PATENTANMELDUNG

(11) **EP 4 403 032 A1**
(43) Veröffentlichungstag der Anmeldung: **24.07.2024**
(21) Anmeldenummer: 24405001.9
(22) Anmeldetag: 02.01.2024
(51) Int. Cl.: A21B 7/00, A47J 27/00, B25J 11/00

(54) **GARVORRICHTUNG ZUM ZUBEREITEN EINES GERICHTS**

(30) Priorität: 17.01.2023 CH 382023
(71) Anmelder: Demiraj, Labinot, 2503 Biel (CH)
(72) Erfinder: Demiraj, Labinot, 2503 Biel (CH)

(57) **Zusammenfassung**

Die Garvorrichtung zum Zubereiten eines Gerichts, insbesondere einer Flija, umfasst eine Arbeitsfläche (10) zur Aufnahme einer Backform (50), mindestens einen erhitzbaren Deckel (30a, 30b) zum Abdecken der Backform, eine Erhitzungsstelle (20), an welcher der mindestens eine Deckel erhitzbar ist, und eine Verschiebeeinrichtung (40), welche eingerichtet ist, den mindestens einen Deckel zwischen der Erhitzungsstelle und der Arbeitsfläche hin und her zu verschieben und auf die Backform zu senken und von dieser abzuheben.

## Beschreibung

Die vorliegende Erfindung bezieht sich auf eine Garvorrichtung zum Zubereiten eines Gerichts, insbesondere einer Flija.

Flija ist ein albanisches Gericht, welches sich aus gebackenem Teig und Milcherzeugnissen zusammensetzt. Um eines der ältesten und authentischsten Gerichte des Mittelmeeres zuzubereiten, werden eine offene Feuerstelle, ein Deckel und eine Backform verwendet. Traditionell wird die Flija schichtenweise in einer Backform zubereitet, auf welche nach Auftragen einer Schicht der auf dem offenen Feuer erhitzter Deckel gelegt wird, so dass die oberste Teigschicht der Flija von oben angebacken wird. Zur Handhabung des Deckels wird z.B. eine Heugabel oder Stock verwendet. Das Backen dieses Gerichts kann gut und gerne mehrere Stunden in Anspruch nehmen je nach Teigschichten.

Flija ist ein Nationalgericht, eine Spezialität, ein Festessen und die liebste Speise der Albaner weltweit. Dieses Gericht wurde über Jahrtausende an die Albaner, von einer Generation an die nächste weitergegeben und konnte bis in die heutige Zeit erhalten bleiben. Gemäss Norbert Jokl (Albanologe): Ein heidnisches (Fest-)Gericht, das mit der Christianisierung der Albaner (in der Spätantike bis ins Frühmittelalter) auch an das Christentum angepasst worden ist. Trotz seiner Antiquität und grossen Beliebtheit bei der albanischen Kommunität, konnte diese Götterspeise noch nicht gewerblich revolutioniert werden wegen der speziellen Zubereitungsart, für welche noch keine industrielle Lösung entwickelt wurde bis anhin.

So weist die traditionelle Zubereitungsmethode verschiedene Nachteile auf: Sie ist kraftintensiv, zeitaufwändig sowie orts- und wetterabhängig, und es besteht die Gefahr, sich zu verbrennen. Diese Art des Kochens erfordert viel Kraft, Geschicklichkeit, Erfahrung und Geduld. Es muss im Freien zubereitet werden bei einer gesicherten Feuerstelle. Das Wetter muss stimmen, und es darf keinen starken Wind haben. Die Zubereitung wird meist auf dem Boden gemacht und in einer nicht komfortablen Position. Dabei kann es zu Verbrennungen kommen. Die Zubereitung in einem Backofen mit Oberhitze ist denkbar, jedoch wird nicht annähernd das gewünschte authentische Ergebnis erzielt und auch hier ist die Handhabung umständlich. Deshalb wird dieses Gericht umstandshalber, vorwiegend bei familiären Zusammenkünften, Feiern oder Ausflügen immer im Freien zubereitet.

Trotz der grossen Beliebtheit des Gerichtes konnte es bis heute noch nicht kommerzialisiert und gewerblich angeboten werden wie eine Pizza oder Kebab und ist daher bis jetzt in den Weltküchen unbekannt geblieben. Selbst für Albaner bleibt diese Delikatesse und Spezialität ein Festessen, für welches eigens ein Ausflug zu einer Feuerstelle gemacht werden muss, um es zu kochen.

Eine Aufgabe der vorliegenden Erfindung ist es, eine Garvorrichtung bereitzustellen, mit welcher eine Backform in effizienter und sicherer Weise wiederkehrend mit Oberhitze beaufschlagt werden kann, so dass die Garvorrichtung insbesondere zur Zubereitung einer Flija geeignet ist.

Eine Garvorrichtung, die diese Aufgabe löst, ist im Anspruch 1 angegeben. Die weiteren Ansprüche geben bevorzugte Ausführungen an.

Gemäss Anspruch 1 umfasst die Garvorrichtung eine Arbeitsfläche zur Aufnahme einer Backform, mindestens einen erhitzbaren Deckel zum Verschliessen der Backform, und eine Verschiebeeinrichtung, welche eingerichtet ist, den mindestens einen Deckel zwischen einer Erhitzungsstelle und der Arbeitsfläche hin und her zu verschieben und auf die Backform zu senken und von dieser abzuheben.

Dadurch kann die Backform in effizienter und sicherer Weise wiederkehrend mit Oberhitze beaufschlagt werden. Die Hygienebedingungen bei der Zubereitung können verbessert werden. Die Garvorrichtung ist so auslegbar, dass sie in Innenräumen, z.B. einer Küche oder einem Verkaufsstand, oder im Aussenbereich, z.B. in einem Garten, verwendet werden kann.

Die Verschiebeeinrichtung ist so auslegbar, dass der Benutzer keine oder eine reduzierte Kraft aufwenden muss, um den Deckel zu verschieben.

Die Arbeitsfläche kann so ausgelegt sein, dass auf Tischhöhe gearbeitet werden kann.

Vorzugweise weist die Verschiebeeinrichtung eine verfahrbare Halteeinrichtung auf zum Halten sowie Heben und Senken des Deckels. Die Halteinrichtung kann so ausgelegt sein, dass sie sich beim Verfahren zwischen Erhitzungsstelle und der Arbeitsfläche starr verhält, so dass der Deckel nicht seitlich hin und her schwingt.

Die Erhitzungsstelle ist z.B. als Feuerstelle ausgebildet, die durch Seitenwände abgegrenzt ist.

Die Erfindung wird im Folgenden anhand von Ausführungsbeispielen unter Bezugnahme auf Figuren erläutert. Es zeigen
- Fig. 1: eine Garvorrichtung in einer perspektivischen Ansicht;
- Fig. 2: die Garvorrichtung gemäss Fig. 1 in der Vorderansicht, und
- Fig. 3: die Garvorrichtung gemäss Fig. 1 in der Draufsicht.

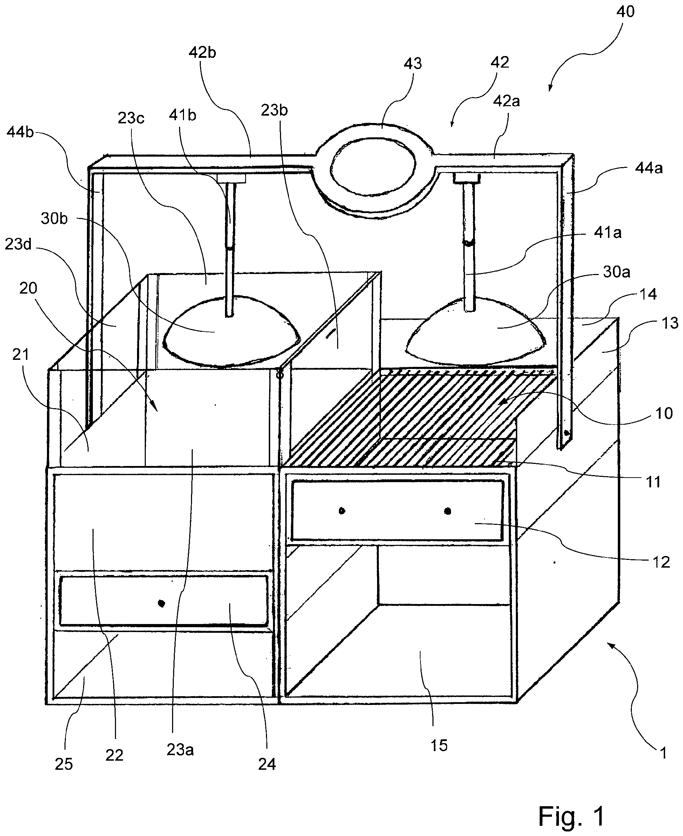

Fig. 1 zeigt ein Ausführungsbeispiel einer Garvorrichtung mit einer Arbeitsfläche 10, einer Erhitzungsstelle 20, Deckel 30a, 30b und einer Verschiebeeinrichtung 40 zum Verschieben des Deckels 30a bzw. 30b zwischen der Erhitzungsstelle 20 und der Arbeitsfläche 10 sowie Heben und Senken des Deckels 30a bzw. 30b. Die Garvorrichtung umfasst ein Gestell 1, an welchem die einzelnen Komponenten angebracht sind.

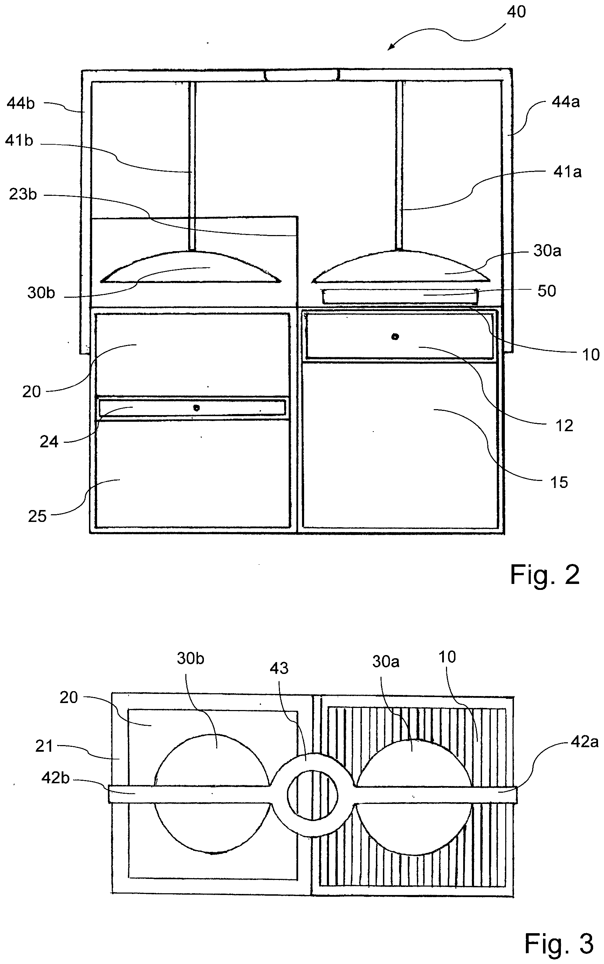

Die Arbeitsfläche 10 dient zur Aufnahme einer Backform 50 (vgl. Fig. 2), auf welchem insbesondere eine Flija zubereitet werden kann. Die Backform 50 ist z.B. als rundes Blech mit einem hochgezogenen Rand ausgebildet. Dieser ist so bemessen, dass der Deckel 30a, 30b auf diesen gelegt werden kann und die Innenseite des Deckels 30a, 30b beanstandet zur obersten Schicht der Flija angeordnet ist.

Die Arbeitsfläche 10 umfasst hier einen Rost 11, welcher über einer Wanne 12 angeordnet ist. In dieser ist z.B. Holzkohle aufnehmbar, so dass bei Bedarf via den Rost 11 das auf der Backform 50 liegende Gargut mittels Unterhitze erhitzt werden kann. Die Wanne 12 ist hier als Schublade ausgebildet, so dass sie durch Herausziehen zugänglich ist, um z.B. Holzkohle aus der Erhitzungsstelle 20 hineinlegen zu können. Die Arbeitsfläche 10 ist an drei Seiten durch Seitenwände 13, 14, 23b begrenzt, so dass sie hier nur von der Vorderseite gut zugänglich ist.

Die Erhitzungsstelle 20 ist neben der Arbeitsfläche 10 angeordnet und weist ein Behältnis 21 auf, in welchem ein Holzfeuer erzeugbar und/oder Holzkohle aufnehmbar ist. Das Behältnis 21 weist Seitenwände 22, 23a-32d auf, die im unteren Bereich z.B. als Metallplatten 22 und im oberen Bereich als Glasplatten 23a-32d ausgebildet sind. Unterhalb des Behältnis 21 ist ein Aschenfach in Form einer Aschenschublade 24 angeordnet. Der Boden des Behältnis 21 weist Öffnungen auf (in Fig. 1 nicht sichtbar), indem er z.B. als Rost ausgebildet ist, so dass die Asche aus dem Holzfeuer ins Aschenfach fallen kann.

Die Glasplatten 23a-23d sind hitzebeständig ausgebildet, z.B. in Form eines Sicherheitsglases, und erlauben von aussen einen Blick auf die Erhitzungsstelle 20. Dies ist z.B. dann vorteilhaft, wenn die Garvorrichtung an einem Verkaufsstand verwendet wird und potentielle Kundschaft das im Behältnis 21 lodernde Feuer sehen kann.

Die Seitenwand 23b des Behältnis 21, welche zur Arbeitsfläche 10 benachbart angeordnet ist, ist als Türe ausgebildet, so dass die Erhitzungsstelle 20 zugänglich für die Arbeitsfläche 10 ist. Hier ist die Türe 23b als Schiebetüre ausgebildet, welche in der Vertikalen verschoben werden kann. Die vordere Seitenwand 23a des Behältnis 21 ist als Türe ausgebildet, hier als Klapptüre, die nach vorne geschwenkt werden kann, so dass die Erhitzungsstelle 20 von vorne zugänglich ist, um z.B. Holz, Kohle oder anderes Brennmaterial nachlegen zu können.

Unterhalb der Wanne 12 und des Aschenfachs 24 ist jeweils ein Lagerfach 15 bzw. 25 vorgesehen, in welchem z.B. Holz und andere Gegenstände gelagert werden können.

Wie auch Fig. 2 zeigt, ist der jeweilige Deckel 30a, 30b gewölbt ausgebildet, so dass er eine Kuppel bildet. Wie Fig. 3 zeigt, ist der jeweilige Deckel 30a, 30b in der Draufsicht gesehen rund ausgebildet. Ein Deckel 30a, 30b ist aus Metall gefertigt und hitzebeständig. Er dient dazu, bei der Erhitzungsstelle 20 erhitzt und dann auf die Backform 50 gelegt zu werden, so dass das daraufliegende Gargut mittels Oberhitze erhitzt werden kann.

Die Verschiebeeinrichtung 40 ist dazu eingerichtet, den Deckel 30a bzw. 30b zwischen der Erhitzungsstelle 20 und der Arbeitsfläche 10 hin und her sowie in der Höhe zu verschieben. Die Verschiebeeinrichtung 40 umfasst dazu eine längenverstellbare Halteeinrichtung 41a, 41b, welche zum Halten des Deckels 30a bzw. 30b und dessen Verschieben in der Höhe ausgebildet ist. Eine Halteeinrichtung 41a, 41b umfasst z.B. eine Teleskopstange, deren Länge beispielsweise gesteuert verändert werden kann. Es ist auch denkbar, eine Halteeinrichtung 41a, 41b mehrteilig auszugestalten und z.B. Gelenke vorzusehen, so dass die Länge manuell verändert werden kann.

Die Verschiebeinrichtung 40 weist weiter eine Schieneneinrichtung 42 auf, welche sich zumindest von der Arbeitsfläche 10 bis zur Erhitzungsstelle 20 erstreckt und mittels Stützelementen 44a, 44b seitlich am Gestell 1 befestigt ist. Die Schieneneinrichtung 42 umfasst eine über der Arbeitsfläche 10 angeordnete Schiene 42a, eine über der Erhitzungsstelle 20 angeordnete Schiene 42b und eine zwischen den Schienen 42a und 42b angeordnete Umlaufschiene 43, welche eine Verzweigung für die Schiene 42a sowie für die Schiene 42b bildet. Die Halteeinrichtungen 41a, 41b sind verfahrbar an der Schieneneinrichtung 42 angeordnet. Die Umlaufschiene 43 dient dazu, die beiden Deckel 30a, 30b aneinander vorbei verschieben zu können. Je nach Platzverhältnissen können die Deckel 30a, 30b auf unterschiedlichen Höhen gebracht werden, bevor sie zur Umlaufschiene 43 verschoben werden, so dass sie in der Draufsicht gesehen überlappend angeordnet sind. Die Schieneneinrichtung 42 ist so ausgestaltbar, dass der jeweilige Deckel 30a, 30b manuell oder gesteuert verfahrbar ist. Im letzteren Fall ist ein Antriebsystem vorgesehen, mit welchem die Halteeinrichtungen 41a, 41b gesteuert bewegbar sind.

### Ein möglicher Arbeitsablauf ist wie folgt:

Bei der Erhitzungsstelle 20 wird Hitze erzeugt durch Verbrennen von Holz und/oder Kohle. Der Deckel 30b wird erhitzt. Auf der Arbeitsfläche 10 befindet sich eine Backform 50. Es werden erste Streifen strahlenförmig zur Bildung der ersten Hälfte einer Schicht in die Backform 50 gegossen. Die Schiebetüre 23b wird gesenkt, der erhitzte Deckel 30b wird zur Arbeitsfläche verschoben und auf die Backform 50 gelegt, währenddessen der andere Deckel 30a zur Erhitzungsstelle 20 verfahren wird, wo er erhitzt wird. Die Schiebetüre 23b wird nach oben geschoben. Der erhitzte Deckel 30b bewirkt ein Garen der Schicht in der Backform 50 durch Oberhitze. Nach der gewünschten Backzeit wird der Deckel 30b angehoben, zwischen den ersten Streifen werden weitere Streifen zur Bildung der zweiten Hälfte der Schicht in die Backform 50 gegossen, der Deckel 30b mit dem erhitzten Deckel 30a wird ausgetauscht und die gegossene Schicht gegart. Dieser Vorgang wird wiederkehrend durchgeführt, bis die letzte Schicht erhitzt worden sind. Am Schluss wird in die Wanne 12 Holzkohle gelegt, welche z.B. aus der Erhitzungsstelle 20 entnommen wird, und die Backform 50 von unten erhitzt.

### Bemerkungen zum Gericht Flija:

Bei der Zubereitung ist dafür zu sorgen, dass das Gericht nur von oben mit einer starken Hitze gebacken wird, damit die darunterliegenden Teigschichten nicht verbrennen oder zu hart werden. Um zum Beispiel eine Schicht der Spezialität "Flija" zu backen, wird ein Deckel 30a bzw. 30b viermal bewegt durch Absetzen und Anheben. Dabei wird viermal ein Deckel 30a, 30b gehoben bzw. viermal abgesetzt, um zweimal eine halbe Schicht zu backen, welche in Streifen (Sonnenform) gelegt (Flija) und welche zusammen eine Schicht ergeben. Je dünner die Streifen sind, desto mehr Flija haben Platz.

Eine mögliche Ausgestaltung der Garvorrichtung lässt sich wie folgt zusammenfassen. Sie kann als Einheit ausgebildet sein, welche z.B. in eine Küche integrierbar oder auch freistehend im Aussen- oder Innenbereich ist. Die Garvorrichtung weist z.B. eine Feuerstelle auf mit einer danebenliegenden Zubereitungsfläche (Arbeitsfläche 10) auf Arbeitshöhe, über welche eine Aufhängevorrichtung mit Schienensysten z.B. in Form der Elemente 41a, 41b, 42 angebracht wird, um darunter einen Deckel 30a, 30b anzubringen, um diesen zwischen Feuerstelle und Arbeitsfläche 10 ohne Mühe seitlich und in der Höhe bewegen zu können.

Die Feuerstelle kann geschlossen ausgebildet und mit Klappen z.B. in Form der Elemente 23a, 23b versehen sein, die sich öffnen lassen, um den Deckel 30a, 30b zur Zubereitungsfläche bewegen und um Holz nachzulegen zu können. Die Zubereitungsfläche kann z.B. mit Holzkohle unterlegt werden für das Finishing des Gerichts. Zu diesem Zweck kann bei der Zubereitungsfläche ein Grillrost z.B. in Form des Elementes 11 und eine feuerfeste Schublade z.B. in Form des Elements 12 vorgesehen sein, welche mit heisser Holzkohle aus der Feuerstelle befüllt werden kann.

Aus der vorangehenden Beschreibung sind dem Fachmann zahlreiche Abwandlungen zugänglich, ohne den Schutzbereich der Erfindung zu verlassen, der durch die Ansprüche definiert ist.

Beim Beispiel gemäss Fig. 1-3 sind zwei Deckel 30a, 30b vorgesehen. In einer vereinfachten Variante sind ein einzelner Deckel 30a oder 30b und eine einzelne Halteeinrichtung 41a oder 41b vorgesehen. Die Umlaufschiene 43 ist dann nicht mehr erforderlich, so dass die Schieneneinrichtung 42 eine einzelne Schiene aufweist, die sich zumindest von der Arbeitsfläche 10 bis zur Erhitzungsstelle 20 erstreckt.

Die Erhitzungsstelle 20 kann auch anders ausgelegt sein, um einen Deckel 30a, 30b zu erhitzen. Beispielsweise kann anstelle eines Holzfeuers eine Gasflamme vorgesehen sein.

Die Oberseite eines Deckels 30a, 30b kann mit einem wärmespeichernden Material, z.B. Vulkangestein, versehen sein.

Es können noch weitere Komponenten vorgesehen sein, z.B. eine Warmehaltestation, welche z.B. anschliessend zur Arbeitsfläche 10 angeordnet ist und welche zum Warmhalten eines zubereiteten Gerichts dient.

Die Garvorrichtung ist so auslegbar, dass sie in Innenräumen, z.B. einer Küche in Form einer Kocheinheit, oder im Aussenbereich, z.B. in einem Garten, verwendet werden kann. Die Garvorrichtung kann insbesondere als Verkaufsstand ausgelegt werden, so dass Flija kommerziell angeboten werden kann, so wie eine Pizza, Raclette, Kebab oder andere Spezialitäten.

## Patentansprüche

1. Garvorrichtung zum Zubereiten eines Gerichts, insbesondere einer Flija, umfassend:
eine Arbeitsfläche (10) zur Aufnahme einer Backform (50),
mindestens einen erhitzbaren Deckel (30a, 30b) zum Abdecken der Backform,
eine Erhitzungsstelle (20), an welcher der mindestens eine Deckel erhitzbar ist, und
eine Verschiebeeinrichtung (40), welche eingerichtet ist, den mindestens einen Deckel zwischen der Erhitzungsstelle und der Arbeitsfläche hin und her zu verschieben und auf die Backform zu senken und von dieser abzuheben.

2. Garvorrichtung nach Anspruch 1, wobei der mindestens eine Deckel (30a, 30b) mindestens eines der folgenden Merkmale A1-A5 aufweist:
A1) er ist gewölbt ausgebildet,
A2) er ist aus Metall gefertigt,
A3) er ist in der Draufsicht gesehen rund ausgebildet,
A4) er weist einen maximalen Durchmesser von mindestens 30 cm auf, bevorzugt mindestens 40 cm,
A5) er.ist, vorzugsweise an seiner Oberseite, mit mindestens einem wärmespeichernden Körper versehen.

3. Garvorrichtung nach einem der vorangehenden Ansprüche, wobei die Verschiebeeinrichtung (40) eine verfahrbare Halteeinrichtung (41a, 41b) aufweist zum Halten sowie Heben und Senken des mindestens einen Deckels (30a, 30b), vorzugsweise weist die Verschiebeeinrichtung ein Antriebssystem auf zum gesteuerten Bewegen der Halteeinrichtung.

4. Garvorrichtung nach Anspruch 3, wobei die Verschiebeeinrichtung (40) eine Schieneneinrichtung (42) aufweist, an welcher die Halteeinrichtung (41a, 41b) verschiebbar angeordnet ist.

5. Garvorrichtung nach Anspruch 4, wobei die Schieneneinrichtung (42) mindestens eine Verzweigung (43) aufweist, so dass mindestens zwei Haltereinrichtungen (41a, 41b) zwischen Erhitzungsstelle (20) und Arbeitsfläche (10) hin und her verschiebbar sind.

6. Garvorrichtung nach einem der vorangehenden Ansprüche, wobei die Erhitzungsstelle (20) ein Behältnis (21) aufweist, in welchem ein Brennmaterial, insbesondere solches aus Holz verbrennbar ist, vorzugsweise ist unterhalb des Behältnisses ein herausziehbares Aschenfach (24) angeordnet.

7. Garvorrichtung nach Anspruch 6, wobei das Behältnis (21) mit Seitenwänden (22, 23a-23d) versehen ist, welche über das Niveau der Arbeitsfläche (10) hinausreichen und/oder welche zumindest teilweise transparent ausgebildet sind und/oder welche zumindest einen bewegbaren Teil aufweisen, um den Zugang zum Behältnis bei Bedarf zu erleichtern.

8. Garvorrichtung nach einem der vorangehenden Ansprüche, wobei die Arbeitsfläche (10) von unten erhitzbar ist und vorzugsweise einen Rost (11) aufweist, auf welchen die Backform (50) legbar ist.

9. Garvorrichtung nach einem der vorangehenden Ansprüche, wobei sich unterhalb der Arbeitsfläche (10) eine Wanne (12) zum Verbrennen eines Brennmaterials befindet, welche vorzugsweise als herausziehbare Schublade ausgebildet ist.

10. Garvorrichtung nach einem der vorangehenden Ansprüche, wobei Arbeitsfläche (10) und Erhitzungsstelle (20) benachbart zueinander angeordnet und vorzugsweise durch eine bewegbare Seitenwand (23b) voneinander getrennt sind, besonders bevorzugt ist die Seitenwand als Schiebetüre ausgestaltet.

11. Garvorrichtung nach einem der vorangehenden Ansprüche, welche ein Gestell (1) aufweist, an welchem die Arbeitsfläche (10), die Erhitzungsstelle (20) und Verschiebeeinrichtung (40) angeordnet sind.

12. Verwendung der Garvorrichtung nach einem der vorangehenden Ansprüche zum Zubereiten eines Gerichts, insbesondere einer Flija.
